# EUROPÄISCHE PATENTSCHRIFT

(11) **EP 3 737 926 B1**
(45) Veröffentlichungstag und Bekanntmachung des Hinweises auf die Patenterteilung: **16.11.2022**
(21) Anmeldenummer: 18819160.5
(22) Anmeldetag: 19.12.2018
(51) Int. Cl.: G01L 19/06

(54) **SCHUTZVORRICHTUNG**
PROTECTION DEVICE
DISPOSITIF DE PROTECTION

(30) Priorität: 09.01.2018 EP 18150814
(43) Veröffentlichungstag der Anmeldung: 18.11.2020
(73) Patentinhaber: Kistler Holding AG, 8408 Winterthur (CH)
(72) Erfinder: HEER, Christian, 8400 Winterthur (CH)
(86) Internationale Anmeldenummer: PCT/EP2018/085885
(87) Internationale Veröffentlichungsnummer: WO 2019/137772

(56) Entgegenhaltungen:
- EP-A1- 2 784 463
- WO-A1-2017/196573
- CN-A- 105 801 070
- DE-A1-102015 224 474
- DE-U1-202011 100 428
- US-A- 3 371 537
- US-A1- 2005 229 709

## Beschreibung

### Technisches Gebiet

Die Erfindung betrifft eine Schutzvorrichtung zur Anbringung an einem Sensor nach dem Oberbegriff des unabhängigen Anspruches.

### Stand der Technik

Ein Sensor ermittelt eine physikalische Grösse und stellt ein Sensorsignal bereit, welches unter idealen Bedingungen der physikalischen Grösse entspricht. In einem Sensor ist zu diesem Zweck ein Sensorelement angeordnet, welches eine Empfindlichkeit auf die physikalische Grösse aufweist. Das Sensorelement ist üblicherweise durch eine Schutzschicht des Sensors, wie eine Membran, gegen bestimmte äussere Einflüsse, wie beispielsweise Staub und/oder Flüssigkeiten und/oder Gase und/oder elektromagnetische Strahlung geschützt. Die Formulierung und/oder ist als nicht-ausschließende Disjunktion zu verstehen. Die Membran besteht üblicherweise aus einem Metall oder einer Metalllegierung oder einem Kunststoff. Ein Medium ist der Träger der physikalischen Grösse und wirkt auf die Membran.

Eine Membran ist äusseren Einflüssen ausgesetzt. Ein äusserer Einfluss ist eine Temperatur, ein Druck, usw.

Eine physikalische Grösse ist beispielsweise ein Druck. Ermittelt ein Sensor einen Druck, so ist ein Gas oder eine Flüssigkeit der Träger der physikalischen Grösse und wirkt auf die Membran. Das Sensorelement eines Drucksensors weist jedoch auch eine Temperaturabhängigkeit auf, welche einen ungewollten Einfluss auf das Sensorsignal darstellt.

Eine Wärmeenergie, welche zu einer Temperaturänderung führt, wird nicht ausschliesslich über ein Medium mittels Wärmeleitung, und nicht ausschliesslich mittels Wärmemitführung bei Konvektion übertragen, sondern auch durch Wärmestrahlung, welche eine elektromagnetische Strahlung ist. Im Folgenden wird der Begriff elektromagnetische Strahlung auch als Synonym für Wärmestrahlung verwendet.

Beim Entzünden einer Flamme in der Nähe der Membran nimmt die elektromagnetische Strahlung auf die Membran rapide zu. Erlischt die Flamme, nimmt die elektromagnetische Strahlung auf die Membran rapide ab. Wird derart auftreffende elektromagnetische Strahlung von der Membran teilweise oder gänzlich absorbiert, so erhöht sich die Temperatur der Membran. Die Erhöhung der Temperatur der Membran geht zumindest teilweise auf das Sensorelement über und beeinflusst dadurch das ermittelte Sensorsignal oder beschädigt das Sensorelement. Durch die Beeinflussung des Sensorsignals werden falsche Werte für die physikalische Grösse ermittelt, wobei die physikalische Grösse im Folgenden nicht die Temperatur selbst ist.

Schnell auftretende Temperaturänderung eines Materials, beispielsweise einer Membran oder eines Sensorelements, werden auch Thermoschock genannt und treten unter anderem dort auf, wo ein Medium verbrannt wird, beispielsweise in der Druckkammer eines Verbrennungsmotors. Verbrennungsmotoren umfassen Viertaktmotoren und Zweitaktmotoren wie Wankelmotoren, Ottomotoren, Dieselmotoren, usw. Thermoschock tritt auch innerhalb anderer Volumen auf in denen ein Druck vorherrscht, wie beispielsweise innerhalb einer Gasturbine, innerhalb eines Strahltriebwerks, innerhalb eines Raketentriebwerks, innerhalb einer Dampfturbine und innerhalb einer Dampfmaschine oder ähnlichen Konstruktionen auf. Im Folgenden werden Druckkammer eines Verbrennungsmotors und oben genannte Volumen, innerhalb derer ein Druck vorherrscht, zusammenfassend als Druckkammer bezeichnet. Der Einfluss eines Thermoschocks auf das Sensorsignal eines in einer Druckkammer eingebrachten Sensors lässt sich, anders als nahezu eine konstante Umgebungstemperatur mit langsamer zeitlicher Änderung, nicht oder nur unzureichend im Rahmen einer Kalibrierung minimieren.

Des Weiteren wird die Membran durch Thermoschock beschädigt, falls die Temperatur einen materialabhängigen Schwellwert für das Material der Membran übersteigt. Auch lassen wiederholte Thermoschocks die Membran altern und führen zu einer altersbedingten Beschädigung der Membran.

Aus EP2024710A1 ist ein Membranschutz bekannt, welcher an einen Frontbereich eines im Frontbereich mit einer Membran versehenen Sensors befestigt ist und welcher Membranschutz Temperaturen bis 500 °C erträgt. In einer Ausführungsform weist der Membranschutz eine Vielzahl von Öffnungen, (Durchgängen) auf, durch die ein Medium mit zu messenden Informationen hindurchtreten kann. Der Durchmesser der Durchgänge ist so gewählt, dass Flammen nicht hindurchtreten können, wodurch der Membranschutz ein Flammschutz ist.

Nachteilig ist hierbei, dass elektromagnetische Strahlung ausgehend von mindestens einer Strahlungsquelle auf der Mediumseite direkt durch die Durchgänge auf die Membran wirken kann es so zu einem Thermoschock kommt. Dies führt zu der Beeinflussung des Sensorsignals und es werden falsche Werte für die physikalische Grösse ermittelt. Je nach Intensität der elektromagnetischen Strahlung kann die elektromagnetische Strahlung zu einer Beschädigung der Membran und/oder des Sensorelements führen.

Ein metallischer oder keramischer Flammschutz wird in US20050229709A1 offenbart. Der Flammschutz weist zwei beabstandete parallele Platten mit Öffnungen auf. Öffnungen der ersten Platte sind nicht in einer Flucht mit Öffnungen der zweiten Platte angeordnet, so dass nur bei einer Blickrichtung senkrecht auf die erste Platte die Öffnungen der zweiten Platte nicht sichtbar sind. nicht durch die nicht Aufsicht auf die Platten.

Eine Vorrichtung zum Schutz von vakuumtechnischen Einrichtungen vor Kontamination von im Restgas enthaltenen Teilchen ist in DE202011100428U1 offenbart. Eine Baueinheit zur Teilchenadsorption weist mehrere Lamellenebenen (1) auf. Die Längsachsen der Lamellen sind der jeweiligen benachbarten Ebene zueinander unter einem vorgegebenen Winkel orientiert. Die Lamellen können zur Verbesserung der Adsorption von Teilchen beschichtet sein.

Kohlenstofffaser-Beschichtungsplatten und deren Eigenschaften hinsichtlich elektromagnetischer Strahlung werden in CN105810170A offenbart.

Die Schrift EP2784463A1 beschreibt eine spaltfreie Anbindung einer Druckmesszelle an eine Prozessumgebung, insbesondere für chemische und pharmazeutische Industrie, aber auch für die Lebensmittelindustrie.

Ein Maximaldruckanzeiger für Verbrennungsmotoren mit einem Rückschlagventil zum Halten des maximalen Drucks ist in US3371537A. Ein Filter befindet sich im Durchgang zwischen Motor und Maximaldruckanzeiger.

Aufgabe der vorliegenden Erfindung ist es, eine Schutzvorrichtung für eine Membran eines Sensors derart auszuführen, dass eine sich im Durchgang ausbreitende elektromagnetische Strahlung erst nach mindestens einer Reflexion an einer Wandung des Durchgangs auf die Membran gelangt, wodurch die Intensität der auf die Membran treffenden elektromagnetischen Strahlung verringert ist. Eine weitere Aufgabe der Erfindung besteht darin, die Schutzvorrichtung derart auszuführen, dass ein Medium als Träger der zu ermittelnden physikalischen Grösse möglichst ungehindert auf die Membran einwirken kann.

### Darstellung der Erfindung

Mindestens eine der Aufgaben wird durch die kennzeichnenden Merkmale des unabhängigen Anspruchs gelöst.

Die Erfindung betrifft eine Schutzvorrichtung für eine Membran eines Sensors zur Verwendung in einer Druckkammer eines Verbrennungsmotors; welcher Sensor eine physikalische Grösse ermittelt, welche physikalische Grösse durch ein Medium übertragen wird, welches Medium auf die Membran wirkt; welche Schutzvorrichtung am Sensor anbringbar ist; welche Schutzvorrichtung eine Längsachse aufweist; welche Schutzvorrichtung im am Sensor angebrachten Zustand die Membran vor elektromagnetischer Strahlung mindestens einer Strahlungsquelle schützt; welche Schutzvorrichtung mindestens einen Durchgang aufweist, durch welchen Durchgang im am Sensor angebrachten Zustand der Schutzvorrichtung das Medium zur Membran gelangen kann; und in welchen Durchgang im am Sensor angebrachten Zustand der Schutzvorrichtung sich die elektromagnetische Strahlung ausbreiten kann; wobei eine sich im Durchgang ausbreitende elektromagnetische Strahlung erst nach mindestens einer Reflexion an einer Wandung des Durchgangs, kurz Durchgangswandung, auf die Membran gelangt.

Dadurch ist die Intensität der auf die Membran treffenden elektromagnetischen Strahlung verringert gegenüber einer Schutzvorrichtung mit Durchgängen, in denen sich die elektromagnetische Strahlung ohne eine Reflexion an der Wandung des Durchgangs von der Strahlungsquelle zu der Membran ausbreiten kann.

Die Schutzvorrichtung weist im angebrachten Zustand eine Fläche auf, welche der Membran des Sensors zugewandt ist und welche als Membranseite bezeichnet wird. Die der Membran abgewandte Seite der Schutzvorrichtung wird als Mediumseite bezeichnet. Die Durchführungen führen von der Mediumseite zur Membranseite.

Die Ausbreitung elektromagnetischer Strahlung erfolgt ausgehend von einer Strahlungsquelle strahlenförmig und geradlinig im Raum.

Erfindungsgemäss existiert keine gradlinige Verbindung durch den Durchgang 7 zwischen einer Position auf der Membranseite 31 und einer Position auf der Mediumseite 41.

Trifft elektromagnetische Strahlung, kurz Strahlung, auf die Schutzvorrichtung, so ist erfindungsgemäss mindestens eine Reflexion an einer Wandung des Durchgangs, kurz Durchgangswandung, notwendig, damit die Strahlung von der Strahlungsquelle zu der Membran gelangt. Trifft die Strahlung auf die Durchgangswandung, so wird die Strahlung teilweise absorbiert, teilweise reflektiert und teilweise gestreut und breitet sich von der Durchgangswandung erneut strahlenförmig und geradlinig aus.

Unter einer Reflektion der Strahlung wird eine gerichtete Reflektion der Strahlung an einer Fläche verstanden, wohingegen unter einer Streuung der Strahlung eine diffuse Reflektion der Strahlung an einer Fläche verstanden wird. Unter einer Absorption wird die Umwandlung der Strahlung an der Fläche in Wärmeenergie verstanden, was der Fläche somit Wärmeenergie zuführt.

Nach einem Auftreffen der Strahlung auf die Durchgangswandung sinkt somit die Intensität der sich im Durchgang ausbreitenden Strahlung. Dies geschieht auf Grund von Absorption eines Teiles der Strahlung an der Durchgangswandung. Dies geschieht auch auf Grund von teilweiser Reflexion und Streuung der Strahlung in eine Richtung, in der die Strahlung auf der der Membran abgewandten Seite der Schutzvorrichtung, kurz Mediumseite, aus der Durchführung wieder austritt und somit nicht zur Membran gelangt. Dies wird als Rückstreuung bzw. Rückreflexion bezeichnet.

Nur ein kleiner Teil der Strahlung kann nach nur einem auftreffen auf die Durchgangswandung auf die Membran treffen. Der weitaus grössere Teil der Strahlung trifft mehrfach auf die Durchgangswandung, wobei die Intensität mit jedem Auftreffen durch die oben genannte Absorption abnimmt. Rückstreuung und Rückreflexion verringern zusätzlich die Intensität der Strahlung, welche die Membran erreicht. Die Strahlung, welche die Membran erreicht ist daher um ein Vielfaches geringer als die Strahlung, welche durch eine Schutzvorrichtung nach dem Stand der Technik die Membran erreicht.

Zugleich ist ein möglichst ungehinderter Durchgang des Mediums durch die Schutzvorrichtung erforderlich, um einen Einfluss der Geometrie der Schutzvorrichtung auf die zu ermittelnde Information zu minimieren. Ist der Strömungswiderstand der Durchgänge hoch, so wirkt eine Druckänderung auf Grund des Strömungswiderstandes des Mediums durch die Durchgänge verzögert auf die Membran. Der Strömungswiderstand ist abhängig vom lichten Profil der Durchgänge und der Länge der Wegstrecke, den das Medium durch den Durchgang zurücklegt. Ein lichtes Profil eines Durchgangs ist die Fläche des Durchgangs projiziert auf eine Ebene. Daher existiert eine Grenzfrequenz für Druckänderungen, wobei Druckänderungen welche schneller als der Kehrwert der Grenzfrequenz ablaufen nur mit unzureichender Genauigkeit bezüglich des zeitlichen Verlaufs des Druckes ermittelt werden können.

Des Weiteren weisen die Durchgänge eine Resonanzfrequenz auf, da die Zusammenstellung aus Schutzvorrichtung und Sensor einen Helmholtz-Resonator mit mindestens einer Resonanzfrequenz darstellt. Druckänderungen, welche auf Zeitskalen im Bereich der inversen Resonanzfrequenz auftreten, werden ungenau ermittelt. Die Resonanzfrequenz ist abhängig von dem Volumen zwischen Schutzvorrichtung und Membran sowie dem lichten Profil der Durchgänge. Ein lichtes Profil eines Durchgangs ist die Fläche des Durchgangs projiziert auf eine Ebene.

Die Schutzvorrichtung ist derart ausgeführt, dass der Quotient aus Summe der lichten Profile der Durchgänge auf der Membranseite oder der Mediumseite und der Oberfläche der Membran mindestens 0.25 ergibt. Die Resonanzfrequenz und die Grenzfrequenz werden dadurch erhöht und schnelle Druckänderungen, wie sie in einem Verbrennungsmotor auftreten, werden ohne Einfluss der Resonanzfrequenz ermittelt.

### Kurze Beschreibung der Zeichnungen

Im Folgenden wird die Erfindung beispielhaft unter Beizug der Figuren näher erklärt. Es zeigen
- Fig. 1: eine Schnittansicht einer Schutzvorrichtung in bevorzugter Ausführungsform mit einem Sensor in einem Einbauteil, wobei der Sensor der Übersichtlichkeit halber nicht mit der Schnittschraffur versehen ist;
- Fig. 2: einen Querschnitt parallel zur Längsachse durch die Ausführungsform der Schutzvorrichtung nach Fig. 1;
- Fig. 3: eine Ansicht der Schutzvorrichtung nach Fig. 1;
- Fig. 4: eine Schnittansicht einer Schutzvorrichtung in einer weiteren Ausführungsform mit einem Sensor in einem Einbauteil, wobei der Sensor der Übersichtlichkeit halber nicht mit der Schnittschraffur versehen ist;
- Fig. 5: einen Querschnitt parallel zur Längsachse durch die Ausführungsform der Schutzvorrichtung nach Fig. 4;
- Fig. 6: eine Ansicht der Schutzvorrichtung nach Fig. 4.

### Wege zur Ausführung der Erfindung

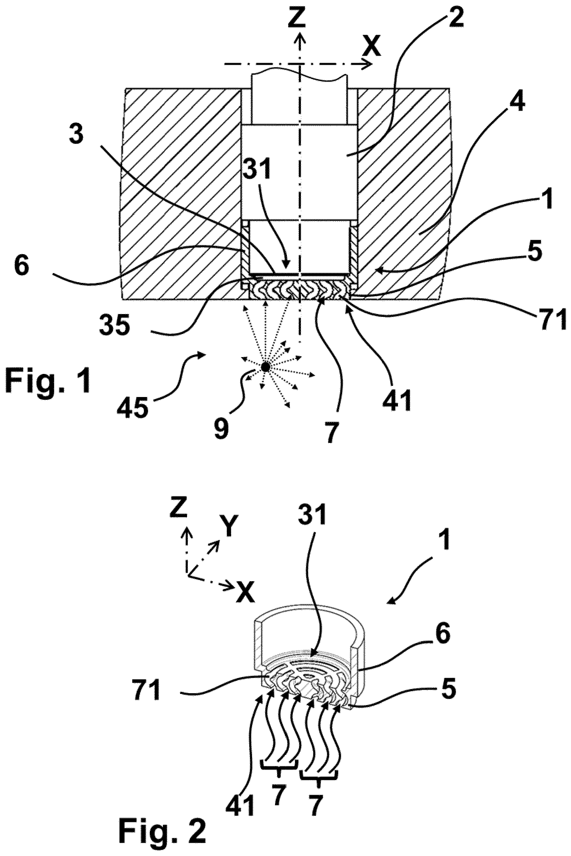

Fig. 1 zeigt eine Schnittansicht der Schutzvorrichtung 1 in bevorzugter Ausführungsform mit einem Sensor 2 in einem Einbauteil 4. Der Sensor 2 ist der Übersichtlichkeit halber nicht mit der Schnittschraffur versehen.

Der Sensor 2 ist mehrheitlich stabförmig entlang der Längsachse Z ausgeführt. Der Sensor 2 ist in ein Einbauteil 4 eingebaut. Der Sensor 2 ist vorteilhafterweise in das Einbauteil 4 eingebracht. Das Einbauteil 4 begrenzt ein Kammervolumen 11, in dem die physikalische Grösse ermittelt werden soll. Im Kammervolumen 11 befindet sich das Medium, welches der Träger der physikalischen Grösse ist. Am dem Kammervolumen 11 zugewandten Ende des Sensors 2 weist der Sensor 2 die Membran 3 auf, welche Parallel zu einer ersten Radialachse X und Parallel zu einer zweiten Radialachse Y ist. Längsachse Z, erste Radialachse X und zweite Radialachse Y bilden ein Orthogonalsystem. Erste Radialachse und zweite Radialachse bilden eine Radialebene XY. Das Medium wirkt auf die Membran 3.

Das Kammervolumen ist in einer Ausführungsform das Kammervolumen einer Druckkammer eines Verbrennungsmotors.

Die Radialebene XY, welche durch die erste Radialachse X und die zweite Radialachse Y aufgespannt wird, wird im Folgenden alternativ durch einen Radius R und einen Polarwinkel W beschrieben. Radius R, Polarwinkel W und Längsachse Z bilden ein Zylinderkoordinatensystem.

Die Schutzvorrichtung 1 ist in bevorzugter Ausführungsform topfförmig ausgeführt, mit einem scheibenförmigen Topfboden 5 und einer hohlzylinderförmigen Topfwand 6, welche hohlzylinderförmigen Topfwand 6 eine Längsachse Z aufweist. Topfwand 6 und Topfboden 5 sind einteilig ausgeführt oder stoffschlüssig verbunden.

Die Schutzvorrichtung 1 ist am Sensor 2 anbringbar. Die Schutzvorrichtung 1 schützt im am Sensor 2 angebrachten Zustand die Membran 3 vor elektromagnetischer Strahlung mindestens einer Strahlungsquelle 9, welche Strahlungsquelle 9 im Kammervolumen 45 angeordnet ist.

Die Schutzvorrichtung 1 ist im angebrachten Zustand derart am Sensor 2 angeordnet, dass die inneren Flächen der hohlzylinderförmigen Topfwand 6 die äussere Fläche des Sensors 2 gegenüberliegen und die Membran 3 der Membranseite 31 des Topfbodens 5 zugewandt ist. Die andere Seite des scheibenförmigen Topfbodens 5 ist als Mediumseite 41 bezeichnet. Membran 3 und Topfboden 5 sind weitgehend parallel ausgerichtet und entlang der Längsachse Z beabstandet. Die Schutzvorrichtung 1 ist demnach zwischen Membran 3 und Kammervolumen 45 angeordnet und die Längsachse Z des Sensors 2 entspricht der Längsachse Z der hohlzylinderförmigen Topfwand 6.

Die Schutzvorrichtung 1 ist in einer Ausführungsform mit dem Sensor 2 stoffschlüssig verbunden, beispielsweise mittels einer Schweissverbindung.

Die Schutzvorrichtung 1 ist in einer weiteren Ausführungsform mit dem Sensor 2 kraftschlüssig verbunden, beispielsweise durch eine Schraubverbindung oder Klemmelemente.

In einer weiteren Ausführungsform ist die Schutzvorrichtung 1 formschlüssig mit dem Sensor 2 verbunden, beispielsweise durch einen Bajonettverschluss.

Membran 3, Topfboden 5 und Topfwand 6 umschliessen ein membranseitiges Volumen, kurz Membranvolumen 35.

Im Topfboden 5 ist mindestens ein Durchgang 7 angeordnet, durch welchen Durchgang 7 im am Sensor 2 angebrachten Zustand der Schutzvorrichtung 1 das Medium vom Kammervolumen 45 auf der Mediumseite 41 in das Membranvolumen 35 auf der Membranseite 31 gelangt. Im Durchgang 7 kann sich im am Sensor 2 angebrachten Zustand der Schutzvorrichtung 1 die elektromagnetische Strahlung ausbreiten.

Der Durchgang 7 im Topfboden 5 der Schutzvorrichtung 1 ist erfindungsgemäss derart ausgeführt, dass elektromagnetische Strahlung einer Strahlungsquelle 9 im Kammervolumen 45, welche sich im Durchgang 7 ausbreitet, erst nach mindestens einer Reflexion an einer Durchgangswandung 71 auf die Membran 3 gelangt.

Erfindungsgemäß existiert keine gradlinige Verbindung durch den Durchgang 7 zwischen einer Position auf der Membranseite 31 und einer Position auf der Mediumseite 41.

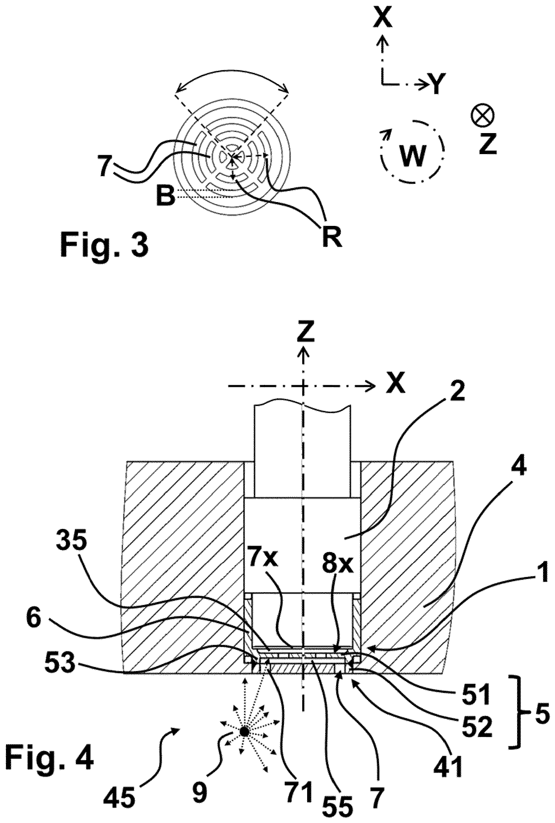

In Fig. 2 ist eine bevorzugte erste Ausführungsform der Schutzvorrichtung 1 gezeigt, mit einer Schnittebene entlang der Längsachse Z und dem Radius R bei einem konstanten Polarwinkel W. Der Topfboden 5 weist mindestens einen Durchgang 7 mit einer definierten Breite B auf, welche in Fig. 3 bezeichnet ist, welcher Durchgang 7 in der Schnittebene einen Verlauf ähnlich dem um 90° gekippten Buchstaben v hat. Der v-förmige Verlauf ist gegeben durch eine Bahnkurve in der Schnittebene, welche die Mitte der Durchführung in Radialebene XY beschreibt, welche Bahnkurve einen Radius R in Abhängigkeit der Längsachsenposition angibt, welcher Radius der Bahnkurve sich mit Fortschreiten in Längsrichtung Z um mehr als die Breite B vergrössert bis zu einem Punkt, welcher in etwa mittig zwischen der Membranseite 31 des Topfbodens 5 und der Mediumseite 41 des Topfbodens 5 liegt. Und ab dem in etwa mittig zwischen der Membranseite 31 des Topfbodens 5 und der Mediumseite 41 des Topfbodens 5 liegenden Punkt verkleinert sich der Radius R der Bahnkurve wieder um mehr als die Breite B. Durch diesen Verlauf der Bahnkurve ist keine geradlinige Verbindung zwischen der Membranseite 31 und der Mediumseite 41 durch einen Durchgang 7 möglich. Elektromagnetische Strahlung, welche sich geradlinig von der Strahlungsquelle 9 kommend teilweise im Durchgang 7 ausbreitet, gelangt erst nach mindestens einer Reflexion an einer Durchgangswandung 71 auf die Membran 3.

Der Durchgang 7 beschreibt für jede Ebene senkrecht zur Längsachse Z mindestens einen Kreisbogen auf einem konstanten Radius R entlang dem Polarwinkel W mit einem Mittelpunktswinkel A des Kreisbogens kleiner 355°, wie in Fig. 3 gezeigt. Der Mittelpunktswinkel A ist der Winkel zwischen zwei Geraden, die vom Mittelpunkt des Kreises, von welchem der Kreisbogen ein Teil ist, zu den Enden des Kreisbogens führen. Sind mehrere Durchgänge auf einem gleichen Radius R vorhanden, so ist die Summe der Mittelpunktswinkel A ihrer Kreisbögen kleiner 355°. Der verbleibende Winkel von mindestens 5°, welcher nicht durch einen Kreisbogen des Durchgangs 7 genutzt ist, dient der Stabilität des Topfbodens 5 und verhindert, dass durch die Kreisbögen der Durchgänge 7 der Topfboden 5 in mehrere separate Teile geteilt ist.

Vorteilhafterweise sind mehrere Durchgänge 7 derart im Topfboden 5 angeordnet, dass sie auf unterschiedlichen Radien R auf der Mediumseite 41 beginnen, eine v-Form entlang der Längsachse Z aufweisen und auf unterschiedlichen Radien R auf der Membranseite 31 enden, ohne dass sich die Durchgangswandungen 71 unterschiedlicher Durchgänge 7 untereinander berühren. Dadurch wird auf mindestens der Membranseite 41 des Topfbodens 5 oder der Mediumseite 41 des Topfbodens 5 eine Summe der lichten Profile der Durchgänge 7 erreicht, sodass der Quotient aus der Summe der lichten Profile der Durchgänge 7 und der Oberfläche der Membran 3 mindestens 0.25 ergibt. Ein lichtes Profil eines Durchgangs 7 ist die Fläche des Durchgangs 7 projiziert auf eine Ebene, beispielsweise die Ebene einer Oberfläche des Topfbodens 5 auf der Mediumsseite 41 oder der Membranseite 31.

Vorteilhafterweise ist die Schutzvorrichtung 1 in bevorzugter Ausführungsform aus einem Metall oder einer Metalllegierung ausgeführt. In besonders vorteilhafter Ausführungsform ist die Schutzvorrichtung 1 aus einem Metall oder einer Metalllegierung ausgeführt, welche beständig gegen Temperaturen höher 500°C ist.

In einer weiteren Ausführungsform ist die Schutzvorrichtung 1 aus einer Keramik, beispielsweise Siliziumnitrid, ausgeführt.

Vorteilhafterweise wird die Schutzvorrichtung 1 in bevorzugter Ausführungsform mittels selektiven Lasersintern oder selektiven Laserschmelzen ausgeführt, welche Verfahren auf einem lokalem Aufschmelzen eines pulverförmigen Werkstoffes beruhen, beispielsweise einer Legierung oder eines Metalls oder einer Keramik. Durch das schichtweise auftragen des pulverförmigen Werkstoffes und das schichtweise selektive Schmelzen sind oben beschriebene komplex geformte Durchgänge 7 möglich.

Der Fachmann kann auch ein anderes Verfahren zur Herstellung verwenden, wie Laser Metall Deposition oder Direkte Metalldeposition, bei der ein Metallpulver mit einer Düse gezielt an eine Position gebracht wird und auf dem Transport an die Position durch einen Laser aufgeschmolzen wird.

In besonders bevorzugter Ausführungsform weist die Durchgangswandung 71 mindestens eines Durchganges 7 einen hohen arithmetischen Mittenrauwert nach DIN EN ISO 4287:2010, kurz Mittenrauheit, von mindestens 5 Mikrometern auf. Dadurch wird einfallende elektromagnetische Strahlung nicht nur reflektiert sondern auch gestreut. Vorteilhafterweise beträgt der gerichtete Anteil der reflektierten elektromagnetischen Strahlung, die Reflektion, weniger als 80 %. Dadurch wird der an den Durchgangswandung 71 reflektierte und so von der Mediumseite 41 zur Membranseite 31 gelangte Anteil der elektromagnetischen Strahlung minimiert und der Einfluss der elektromagnetischen Strahlung auf die Membran 3 verringert.

In Fig. 4 ist eine weitere bevorzugte Ausführungsform der Schutzvorrichtung 1 in einer Schnittansicht dargestellt. Der Sensor 2 ist der Übersichtlichkeit halber nicht mit der Schnittschraffur versehen.

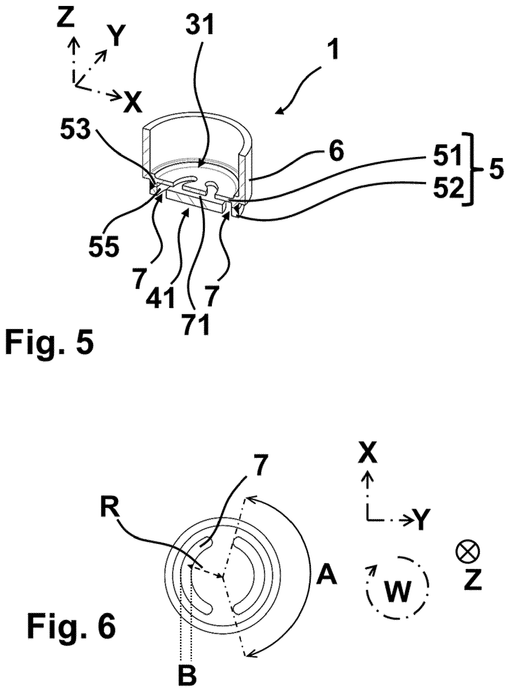

Die Schutzvorrichtung 1 ist topfförmig ausgeführt, mit einem scheibenförmigen Topfboden 5 und einer hohlzylinderförmigen Topfwand 6. Der scheibenförmige Topfboden 5 weist mindestens zwei parallel aufeinanderliegende scheibenförmige Topfbodenteile 34, 31 auf, welche stoffschlüssig verbunden sind. Mindestens ein Topfbodenteil 34 weist auf der dem anderen Topfbodenteil 31 zugewandten Seite am äusseren Rand der Oberfläche des Topfbodenteils 51 eine stegförmige Erhöhung 53 in Richtung der Längsachse Z auf, welche um den äusseren Rand der Oberfläche gänzlich ausgeführt ist. Die stegförmige Erhöhung 53 liegt auf dem jeweils anderen Topfbodenteil 52 auf. Entlang der stegförmigen Erhöhung 53 sind die Topfbodenteile 51, 52 stoffschlüssig verbunden, welche stoffschlüssige Verbindung in Fig. 4 und Fig. 5 durch ein schwarzes Dreieck dargestellt ist. Durch die am äusseren Rand vorhandene stegförmige Erhöhung 53 weist der Topfboden 5 ein Volumen zwischen den Topfbodenteilen 34, 31 auf, welches als Zwischenvolumen 55 bezeichnet ist.

Topfwand 6 und ein Topfbodenteil 51 sind einteilig ausgeführt oder stoffschlüssig verbunden. Der Sensor 2 ist innerhalb der Schutzvorrichtung 1 derart angeordnet, dass die inneren Flächen der Topfwand 6 die äussere Fläche des Sensors 2 gegenüberliegen und die Membran 3 der Membranseite 31 des Topfbodens 5 zugewandt ist.

Die Topfbodenteile 51, 52 weisen Durchgänge 7 auf, welche derart auf den Topfbodenteilen 51,52 angeordnet sind, dass die Durchgänge 7 zusammen mit dem Zwischenvolumen 55 einen weitgehend s-förmigen Verlauf in mindestens einer Schnittansicht eines Schnittes parallel zur Längsachse Z aufweisen. Die Position der Durchgänge 7 der Topfbodenteile 34, 52 und die Dimension der Erhöhung 53 sind so gewählt, dass eine sich im Durchgang ausbreitende elektromagnetische Strahlung einer im Kammervolumen 45 angeordneten Strahlungsquelle 9 erst nach mindestens einer Reflexion an einer Durchgangswandung 71 auf die Membran 3 gelangt, wie in Fig.5 gezeigt.

Auf mindestens der Membranseite 31 des Topfbodens 5 oder der Mediumseite 41 des Topfbodens 5 ist die Summe der lichten Profile der Durchgänge 7 derart, dass der Quotient aus der Summe der lichten Profile der Durchgänge 7 und der Oberfläche der Membran 3 mindestens 0.25 ergibt, wie in Fig. 6 gezeigt ist.

In einer Ausführungsform ist die Schutzvorrichtung 1 mittels zerspanender Fertigungsmethoden ausgeführt. Durchgänge 7 können beispielswiese mittels fräsen oder bohren aus unterschiedlichen Winkeln in mehreren Arbeitsschritten ausgeführt werden.

In einer Ausführungsform der Schutzvorrichtung 1 weist mindestens eine Durchgangswandung 71 eine Beschichtung auf, welche Beschichtung elektromagnetische Strahlung absorbiert. Die Beschichtung absorbiert mindestens 10% der einfallenden Intensität der elektromagnetischen Strahlung, was zu einer Verringerung der reflektierten Intensität bezüglich einer unbeschichteten Durchgangswandung 71 um mindestens 10 % bedeutet.

In einer weiteren Ausführungsform der Schutzvorrichtung 1 weist die Durchgangswandung 71 eine Beschichtung auf, welche Beschichtung eine Antihaftbeschichtung ist. Im Medium vorhandene Partikel adsorbieren auf Grund der Antihaftbeschichtung 50 % weniger an der Durchgangswandung 71 als an einer unbeschichteten Durchgangswandung 71.

Selbstverständlich kann der Fachmann auch eine andere Anordnung der Durchgänge 7 wählen. So ist denkbar, dass die Durchgänge 7 keine Kreisbögen sondern Geraden in der Ebene parallel zur Längsachse Z beschreiben. Auch ist ein Durchgang 7 denkbar, welcher ein kreisförmiges lichtes Profil aufweist.

Selbstverständlich kann der Fachmann den Durchgang 7 auch so ausführen, dass er in einer Schnittebene parallel zur Längsachse Z eine Bahnkurve aufweist, welche nicht weitgehend s-förmig oder v-förmig ist, welche jedoch so geformt ist, dass eine sich im Durchgang 7 ausbreitende elektromagnetische Strahlung der Strahlungsquelle 15 erst nach mindestens einer Reflexion an einer Durchgangswandung 71 auf die Membran 3 gelangt.

In bevorzugter Ausführungsform ist der Sensor ein Drucksensor, in welchem Drucksensor ein piezoelektrisches Messelement angeordnet ist. Die Membran übt unter Wirkung eines Druckes auf die Membran eine Kraft auf das piezoelektrische Messelement aus, welches eine elektrische Ladung entsprechend der ausgeübten Kraft generiert. Mittels bekannter elektronischer Bauelemente wird die elektrische Ladung gewandelt und als Sensorsignal bereitgestellt.

### Bezugszeichenliste

- 1: Schutzvorrichtung
- 2: Sensor
- 3: Membran
- 4: Einbauteil
- 5: Topfboden
- 6: Topfwand
- 7: Durchgang
- 9: Strahlungsquelle
- 31: Membranseite
- 35: membranseitiges Volumen, Membranvolumen
- 41: Mediumseite
- 45: Kammervolumen
- 51: Topfbodenteil
- 52: Topfbodenteil
- 53: Erhöhung
- 55: Zwischenvolumen
- 71: Durchgangswandung, Wandung des Durchgangs
- A: Mittelpunktswinkel
- R: Radius
- W: Polarwinkel
- X: erste Radialachse
- Y: zweite Radialachse
- Z: Längsachse

## Patentansprüche

1. Schutzvorrichtung (1) für eine Membran (3) eines Sensors (2)zur Verwendung in einer Druckkammer eines Verbrennungsmotors; welcher Sensor (2) eine physikalische Grösse ermittelt, welche physikalische Grösse durch ein Medium übertragen wird, welches Medium auf die Membran (3) wirkt; welche Schutzvorrichtung (1) am Sensor (2) anbringbar ist; welche Schutzvorrichtung (1) eine Längsachse (Z) aufweist; welche Schutzvorrichtung (1) im am Sensor (2) angebrachten Zustand die Membran (3) vor elektromagnetischer Strahlung mindestens einer Strahlungsquelle (9) schützt; welche Schutzvorrichtung (1) mindestens einen Durchgang (7) aufweist, durch welchen Durchgang (7) im am Sensor (2) angebrachten Zustand der Schutzvorrichtung (1) das Medium zur Membran (3) gelangen kann; und in welchen Durchgang (7) im am Sensor (2) angebrachten Zustand der Schutzvorrichtung (1) sich die elektromagnetische Strahlung ausbreiten kann; **wobei** die Schutzvorrichtung (1) im angebrachten Zustand eine der Membran (3) zugewandte Oberfläche, kurz Membranseite (31), aufweist; wobei die Schutzvorrichtung (1) im angebrachtem Zustand eine der Membran (3) abgewandte Oberfläche, kurz Mediumseite (41), aufweist; **dadurch gekennzeichnet, dass** eine sich im Durchgang (7) ausbreitende elektromagnetische Strahlung erst nach mindestens einer Reflexion an einer Wandung des Durchgangs, kurz Durchgangswandung (71), auf die Membran (3) gelangt; und dass keine gradlinige Verbindung durch den Durchgang (7) zwischen einer Position auf der Membranseite (31) und einer Position auf der Mediumseite (41) existiert.

2. Schutzvorrichtung (1) nach Anspruch 1, **dadurch gekennzeichnet, dass** der Durchgang (7) in mindestens einer Schnittansicht eines Schnittes parallel zur Längsachse (Z) v-förmig verläuft.

3. Schutzvorrichtung (1) nach Anspruch 1, **dadurch gekennzeichnet, dass** mindestens ein Durchgang (7) in mindestens einer Schnittansicht eines Schnittes parallel zur Längsachse (Z) s-förmig verläuft.

4. Schutzvorrichtung (1) nach einem der Ansprüche 1 bis 3, **dadurch gekennzeichnet, dass** der Quotient aus der Summe der lichten Profile der Durchgänge (7) auf der Membranseite (31) oder Mediumseite (41) und der Oberfläche der Membran (7) mindestens 0.25 ergibt.

5. Schutzvorrichtung (1) nach einem der Ansprüche 1 bis 4, **dadurch gekennzeichnet, dass** eine Durchgangswandung (71), welche die Wandung innerhalb eines Durchganges ist, eine Mittenrauheit von mindestens 5 Mikrometern aufweist; und dass eine gerichtete einfallende elektromagnetische Strahlung an der rauen Oberfläche derart reflektiert wird, dass der gerichtete Anteil der reflektierten Strahlung weniger als 80 % beträgt.

6. Schutzvorrichtung (1) nach einem der Ansprüche 1 bis 5, **dadurch gekennzeichnet, dass** eine Durchgangswandung (71), welche die Wandung innerhalb eines Durchganges ist, eine Beschichtung aufweist, welche Beschichtung elektromagnetische Strahlung absorbiert; dass die Beschichtung mindestens 10% der einfallenden Intensität der elektromagnetischen Strahlung absorbiert, was zu einer Verringerung der reflektierten Intensität bezüglich einer unbeschichteten Durchgangswandung (71) um mindestens 10 % bedeutet.

7. Schutzvorrichtung (1) nach einem der Ansprüche 1 bis 6, **dadurch gekennzeichnet, dass** eine Durchgangswandung (71), welche die Wandung innerhalb eines Durchganges ist, eine Beschichtung aufweist, welche Beschichtung eine Antihaftbeschichtung ist, wobei 50 % weniger im Medium vorhandene Partikel an der Durchgangswandung (71) adsorbieren als an einer unbeschichteten Durchgangswandung (71).

8. Schutzvorrichtung (1) nach einem der Ansprüche 1 bis 7, **dadurch gekennzeichnet, dass** die Schutzvorrichtung (1) aus einem Metall oder einer Metalllegierung ausgeführt ist.

9. Schutzvorrichtung (1) nach einem der Ansprüche 1 bis 7, **dadurch gekennzeichnet, dass** die Schutzvorrichtung (1) aus einer Keramik ausgeführt ist.

10. Sensor (2) zur Ermittlung einer physikalischen Grösse, welche physikalische Grösse durch ein Medium übertragen wird; welcher Sensor (2) eine Membran (3) aufweist, welches Medium auf die Membran (3) wirkt; **dadurch gekennzeichnet, dass** eine Schutzvorrichtung (1) nach einem der Ansprüche 1 bis 9 am Sensor (2) angebracht ist.

11. Sensor (2) nach Anspruch 10, **dadurch gekennzeichnet, dass** der Sensor (2) ein Drucksensor ist, welcher einen Druck ermittelt; und dass im Drucksensor ein piezoelektrisches Messelement angeordnet ist.

12. Sensor (2) nach Anspruch 10, **dadurch gekennzeichnet, dass** der Sensor (2) in der Druckkammer des Verbrennungsmotors angeordnet ist.

## Claims

1. A protective device (1) for a membrane (3) of a sensor (2) for use in a pressure chamber of an internal combustion engine; wherein said sensor (2) detects a physical parameter, said physical parameter being transmitted through a medium, wherein said medium acts upon said membrane (3); which protective device (1) can be attached to said sensor (2); which protective device (1) has a longitudinal axis (Z); wherein said protective device (1) when attached to the sensor (2) protects the membrane (3) from electromagnetic radiation from at least one source of radiation (9); which protective device (1) comprises at least one passage (7), through which passage (7) the medium is able to reach the membrane (3) when the protective device (1) is attached to the sensor (2); and in which passage (7) the electromagnetic radiation is able to propagate when the protective device (1) is attached to the sensor (2); wherein said protective device (1) in the attached condition comprises a surface facing the membrane (3), briefly designated as the membrane side (31); wherein said protective device (1) in the attached condition comprises a surface opposite of the membrane (3), briefly designated as the medium side (41); **characterized in that** an electromagnetic radiation propagating within the passage (7) reaches the membrane (3) only after at least one reflection on a wall of the passage, briefly referred to as passage wall (71); and **in that** there is no direct connection through the passage (7) between a position on the membrane side (31) and a position on the medium side (41).

2. The protective device (1) according to claim 1, **characterized in that** said passage (7) extends in a V-shape in at least one cross-sectional view of a section parallel to the longitudinal axis (Z).

3. The protective device (1) according to claim 1, **characterized in that** at least one passage (7) extends in an S-shape in at least one cross-sectional view of a section parallel to the longitudinal axis (Z).

4. The protective device (1) according to any of the claims 1 to 3, **characterized in that** the ratio of the sum of the inner profiles of the passages (7) on the membrane side (31) or on the medium side (41) and the surface area of the membrane (7) is at least 0.25.

5. The protective device (1) according to any of the claims 1 to 4, **characterized in that** a passage wall (71), which is the wall inside a passage, has a mean roughness of at least 5 micrometers; and **in that** a targeted incident electromagnetic radiation is reflected on the rough surface in such a way that the targeted proportion of the reflected radiation is less than 80 %.

6. The protective device (1) according to any of the claims 1 to 5, **characterized in that** a passage wall (71), which is the wall inside a passage, comprises a coating, which coating absorbs electromagnetic radiation; **in that** said coating absorbs at least 10 % of the incident intensity of the electromagnetic radiation which leads to a reduction in the reflected intensity by at least 10 % as compared to an uncoated passage wall (71).

7. The protective device (I) according to any of the claims 1 to 6, **characterized in that** a passage wall (71), which is the wall inside a passage, comprises a coating, which coating is a non-stick coating, wherein 50 % less particles present in the medium adsorb on the passage wall (71) as compared to an uncoated passage wall (71).

8. The protective device (1) according to any of the claims 1 to 7, **characterized in that** said protective device (1) is made of a metal or a metal alloy.

9. The protective device (1) according to any of the claims 1 to 7, **characterized in that** said protective device (1) is made of a ceramic material.

10. A sensor (2) for detecting a physical parameter, which physical parameter is transmitted by a medium; which sensor (2) comprises a membrane (3), which medium acts upon the membrane (3); **characterized in that** a protective device (1) according to any of the claims 1 to 9 is attached to said sensor (2).

11. The sensor (2) according to claim 10, **characterized in that** the sensor (2) is a pressure sensor that detects a pressure; and **in that** a piezoelectric measuring element is arranged in the pressure sensor.

12. The sensor (2) according to claim 10, **characterized in that** said sensor (2) is arranged in the pressure chamber of the internal combustion engine.

## Revendications

1. Dispositif de protection (1) pour une membrane (3) d'un capteur (2) destiné à être utilisé dans une chambre de pression d'un moteur à combustion interne; dans lequel ledit capteur (2) détermine une grandeur physique, laquelle grandeur physique est transmise à travers un milieu, ledit milieu agissant sur ladite membrane (3); lequel dispositif de protection (1) peut être monté sur ledit capteur (2); lequel dispositif de protection (1) comporte un axe longitudinal (Z); lequel dispositif de protection (1) dans son état monté sur le capteur (2) protège ladite membrane (3) du rayonnement électromagnétique d'au moins une source de rayonnement (9); lequel dispositif de protection (1) comporte au moins un passage (7), à travers lequel passage (7) ledit milieu peut passer jusqu'à la membrane (3) lorsque ledit dispositif de protection (1) est dans l'état monté sur le capteur (2); et dans lequel passage (7) ledit rayonnement électromagnétique peut se propager lorsque le dispositif de protection (1) est dans l'état monté sur le capteur (2); **dans lequel** ledit dispositif de protection (1), dans l'état monté, comporte une surface en regard de la membrane (3), désignée brièvement côté membrane (31); dans lequel ledit dispositif de protection (1), dans l'état monté, comporte une surface du côté opposé à la membrane (3), désignée brièvement côté milieu (41); **caractérisé en ce qu'**un rayonnement électromagnétique se propageant dans le passage (7) n'arrive sur la membrane (3) qu'après au moins une réflexion sur une paroi du passage, désignée brièvement paroi de passage (71); et **en ce qu'**il n'existe aucune liaison directe à travers le passage (7) entre une position sur le côté membrane (31) et une position sur le côté milieu (41).

2. Dispositif de protection (1) selon la revendication 1, **caractérisé en ce que** ledit passage (7) s'étend en forme de V dans au moins une vue en coupe d'une coupe parallèle à l'axe longitudinal (Z).

3. Dispositif de protection (1) selon la revendication 1, **caractérisé en ce qu'au** moins un passage (7) s'étend en forme de S dans au moins une vue en coupe d'une coupe parallèle à l'axe longitudinal (Z).

4. Dispositif de protection (1) selon l'une quelconque des revendications 1 à 3, **caractérisé en ce que** le quotient de la somme des profils intérieurs des passages (7) du côté membrane (31) ou du côté milieu (41) et de la surface de la membrane (7) vaut au moins 0,25.

5. Dispositif de protection (1) selon l'une quelconque des revendications 1 à 4, **caractérisé en ce qu'une** paroi de passage (71), qui est la paroi à l'intérieur d'un passage, présente une rugosité moyenne d'au moins 5 micromètres; et **en ce qu'**un rayonnement électromagnétique incident ciblé est réfléchi sur la surface rugueuse de telle sorte que la proportion ciblée du rayonnement réfléchi est inférieure à 80 %.

6. Dispositif de protection (1) selon l'une quelconque des revendications 1 à 5, **caractérisé en ce qu'une** paroi de passage (71), qui est la paroi à l'intérieur d'un passage, comprend un revêtement, lequel revêtement absorbe le rayonnement électromagnétique; **en ce que** ledit revêtement absorbe au moins 10 % de l'intensité incidente du rayonnement électromagnétique ce qui signifie que l'intensité réfléchie est réduite d'au moins 10 % par rapport à une paroi de passage (71) sans revêtement.

7. Dispositif de protection (I) selon l'une quelconque des revendications 1 à 6, **caractérisé en ce qu'une** paroi de passage (71), qui est la paroi à l'intérieur d'un passage, comprend un revêtement, lequel revêtement est un revêtement anti-adhérent, dans lequel le nombre de particules présentes dans le milieu s'adsorbant sur la paroi de passage (71) est réduite de 50 % par rapport à une paroi de passage (71) non revêtue.

8. Dispositif de protection (1) selon l'une quelconque des revendications 1 à 7, **caractérisé en ce que** ledit dispositif de protection (1) est réalisé en un métal ou en un alliage métallique.

9. Dispositif de protection (1) selon l'une quelconque des revendications 1 à 7, **caractérisé en ce que** ledit dispositif de protection (1) est réalisé en une céramique.

10. Capteur (2) pour la détermination d'une grandeur physique, laquelle grandeur physique est transmise à travers un milieu; lequel capteur (2) comporte une membrane (3), lequel milieu agit sur la membrane (3); **caractérisé en ce qu'**un dispositif de protection (1) selon l'une quelconque des revendications 1 à 9 est monté sur ledit capteur (2).

11. Capteur (2) selon la revendication 10, **caractérisé en ce que** ledit capteur (2) est un capteur de pression déterminant une pression; et **en ce qu'**un élément de mesure piézoélectrique est agencé dans le capteur de pression.

12. Capteur (2) selon la revendication 10, **caractérisé en ce que** ledit capteur (2) est agencé dans la chambre de pression du moteur à combustion interne.
